# EUROPEAN PATENT SPECIFICATION

(11) **EP 1 469 581 B1**
(45) Date of publication and mention of the grant of the patent: **25.01.2006**
(21) Application number: 03425232.0
(22) Date of filing: 14.04.2003
(51) Int. Cl.: H02M 1/00, H02M 3/335

(54) **Control circuit of the minimum working voltage of the switching power supply**
Regelungsschaltung für die minimale Betriebsspannung einer Spannungsversorgung
Circuit de contrôle pour la tension de fonctionnement minimale d'une alimentation

(43) Date of publication of application: 20.10.2004
(73) Proprietor: STMicroelectronics S.r.l., 20041 Agrate Brianza MI (IT)
(72) Inventor: Adragna, Claudio, 20052 Monza (MI) (IT); Fagnani, Mauro, 20014 Nerviano (MI) (IT)
(74) Representative: Mittler, Enrico

(56) References cited:
- US-A- 5 757 635
- US-A1- 2002 166 073
- US-B1- 6 381 151

## Description

The present invention refers to the switching power supply and particularly to the integrated circuits used for the control of such power supplies. It refers more particularly to a control circuit of the minimum working voltage of the integrated control circuits of such power supplies. The present invention is applicable to various power supply typologies, for example to the circuits for the active power factor correction (PFC), to the pulse width modulation circuits (PWM), to the resonant and almost resonant converter circuits.

A common necessity to all the switching power supply is that to stop its working when the supply voltage of the integrated control circuit is too low.

In fact, the control and, above all, the driving of the power switching (almost always an N channel enrichment MOSFET), requires that the voltage that supplies the integrated control circuit is higher than a minimum value so that not only the inside circuits of the integrated device are supplied adequately but also that the voltage supplied to the gate terminal is such that the MOSFET is fully turned on. The attempt to work below such a value often brings to the MOSFET break because of the driving conditions that bring it to work in the linear zone rather than in the ohmic zone.

Besides, it is opportune to delay the working start of the integrated control circuit from the moment in which the input voltage is applied to the power supply. Besides realizing a well defined system starting sequence, this is absolutely necessary in some cases.

In the network power supplies, during starting, there is a very elevated current pulse absorption due to the fact that such systems have in input a bridge rectifier followed by a filter capacitor that, initially, is uncharged and operates as a short circuit as long as it has not been charged. To avoid that the current reaches dangerous values for the bridge diodes and for the filter capacitor some current limitation means are set (for example a resistance) that however, as they are, are dissipating and therefore must be disconnected once they are not necessary any more. It results therefore advantageous to use a controlled switch, placed in parallel with the limitation element which is, initially open and is closed as soon as the power supply starts its working so as to short-circuit it. It is therefore necessary to introduce a delay at the working start of the integrated control circuit so as to assure that it starts when the input capacitor charging transient is ended.

For all these reasons the integrated control circuits are normally provided with the function normally called Undervoltage Lockout (UVLO).

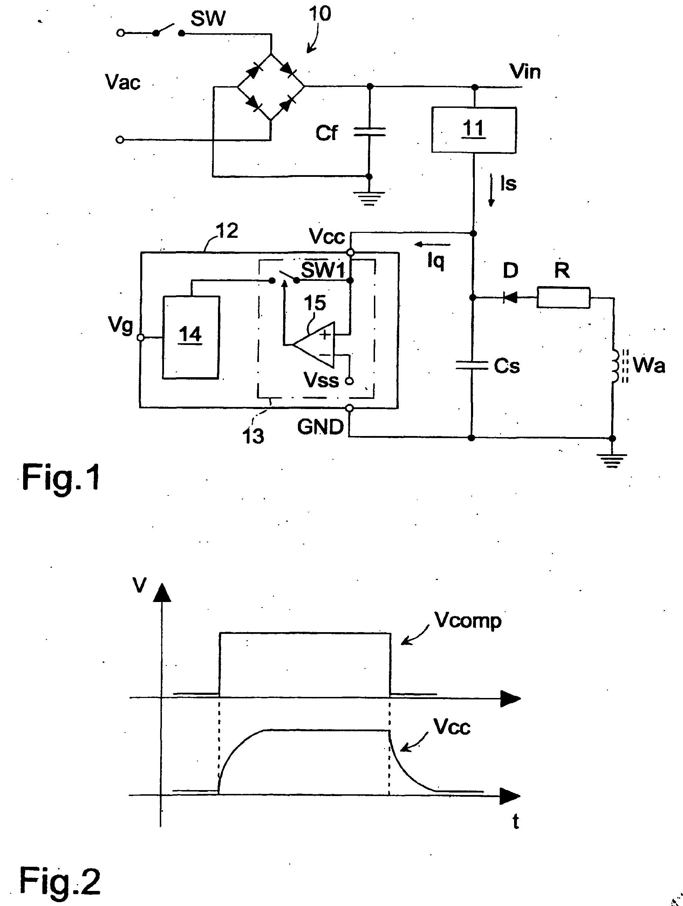

A typical circuit as above is schematically shown in figure 1.

The network voltage Vac is applied through the activation of the switch SW to a diode bridge 10, and therefore to a filter capacitor Cf. The voltage Vin, at the ends of the capacitor Cf, is applied to the starting circuit 11, that is constituted by a resistance in the simplest case, and it provides a current Is. The current Is charges a capacitor Cc. To the capacitor Cc is also applied the voltage coming from a secondary Wa of the power supply transformer, through a resistance R and a diode D. A fraction Iq, of the current Is, supplies the integrated control circuit 12. It is applied both to the block UVLO 13, and to the power supply driving circuit 14, that provides the control voltage Vg to the power switching. The block UVLO 13 includes a comparator 15 with hysteresis that compares the supply voltage Vcc of the same with a starting voltage Vss. The output voltage of the comparator 15 controls a controlled switch SW1 that opens or closes the supply of the driving circuit 14. The voltage Vin is the voltage that will be applied to the power switching of the power supply.

The supply network Vac is applied to the power supply by closing the switch SW and the filter capacitor Cf is charged, in few milliseconds, to the network peak voltage thereby originating the voltage Vin.

The starting circuit 11 provides a current Is that partly charges the capacitor Cs, while a part Iq is absorbed by the integrated control circuit 12. The absorption Iq of the latter under these conditions is very small because the circuit UVLO 13 maintains the switch SW1 open. The current provided by the starting circuit 11 goes therefore for the greatest part to charge the capacitor Cs thereby increasing the voltage Vcc to its ends.

The voltage Vcc continues rising until it reaches the starting value Vss, in a variable time usually from some hundreds of milliseconds to some seconds. In this whole time the driving circuit 14 is turned off, and its output voltage Vg, for driving the MOSFET gate, remains zero. As soon as the voltage Vcc reaches the voltage Vss, the comparator 15 closes the switch SW1, so that the current Iq considerably increases; the driving circuit of the MOSFET is enabled and the activity of the power supply begins.

The increased consumption of the device is not sustained by the starting circuit 11 so that there is a quickly decreasing of Vcc. This is the reason for which the comparator of the circuit UVLO 13 is provided with hysteresis. To turn off again the driving circuit 14 and to go back to the conditions before starting, it is necessary that Vcc goes down below a second threshold Vstop < Vss, said really of UVLO. In lack of this hysteresis a continuous alternation of turning on and turning off would be experienced.

In the meantime, because of the MOSFET switching, the output voltage of the power supply increases quickly together with the voltage, proportional to it, generated by the winding Wa, coupled to the transformer driven by the MOSFET. The winding Wa, the resistance R, the diode D and the capacitor Cs constitute the circuit commonly indicated with the name of self supply, to which the assignment to sustain the working of the integrated circuit at regime is submitted. The turn numbers of the winding Wa will have to be opportunely chosen so that the voltage produced thereby will be higher than Vstop, and the capacitor Cs will have to be opportunely chosen so that the voltage produced by the winding Wa will become higher than the voltage Vstop before the voltage Vcc becomes smaller than the voltage Vstop.

The presence of the threshold voltage Vstop also assures a defined and sure working during the turning off phase. In fact, by opening the switch SW the power supply is supplied at expenses of the charge present in the capacitor Cf, so that its voltage quickly drops. As soon as this becomes insufficient to maintain the power supply active with the load applied at that moment, the output voltage and, with it, Vcc will quickly decrease up to going down below the voltage Vstop. As soon as this happens the driving circuit 14 is turned off, Iq returns at its very low initial value, Vg goes to zero and the MOSFET turns off.

Ideally, the voltage provided by the winding Wa, present at the ends of the capacitor Cs, is hooked through the coil ratio of the transformer, to the output controlled voltage and it is therefore maintained controlled by the control system. In the real working this results almost true, when the power supply input voltage varies, while the situation is very different when the load varies.

This is mainly due to the parasitic parameters of the transformer, because of which at high load the voltage goes up a lot more than expected because of the peaks present on the positive leading edges of the voltage on Wa, while at low or null load, where the peaks are extremely lower and the load on Wa represented by the integrated control circuit 12 can be also higher than at output, the voltage decreases notably below the expected value.

In the most modem integrated control circuits 12, this is emphasized by the adoption of some special techniques aimed to minimise the power supply consumptions at low loads so as to facilitate the conformity to the most recent regulations regarding the consumption reduction of the equipments under non working conditions (for example EnergyStar, Energy2000, Blue Angel, etc.). Such techniques involve, substantially, the reduction of the power supply working frequency at low or null load, so that the energy that Wa is able to transfer is decreased.

Another problem is represented by the fact that the voltage Vcc cannot overcome a set value Vccmax for reasons related to the technology of the integrated control circuit 12 that impose some limits to the voltage applicable to it and, at the same time, under conditions of low or null load, Vcc has to maintain itself higher than Vstop, or the system will work intermittently. The variations of the voltage produced by Wa have therefore to be contained, with some safety margin, within the interval Vstop - Vccmax.

To subsequently complicate the panorama the requirement that the voltage produced by Wa, under short-circuit conditions at the output of the power supply, should be lower than the voltage Vstop, is also added. So an intermittent working is obtained that limits the power in use to non dangerous values for the system integrity. It is understood, from what previously said, that under short circuit conditions the peaks produced on Wa are particularly elevated and can be sufficiently energetic to sustain the Vcc above Vstop, where, ideally, the voltage generated by Wa should be near zero.

To contain the phenomenon of the too high voltage at a maximum load and to assure the intermittent working under short circuit conditions, further to optimize the constructive formalities of the transformer, usually the resistance R in series with the diode D is used for the purpose to round off the peaks. Sometimes, in alternative a small coil is used. Nevertheless, both solutions stress the decreasing of Vcc at low or null load. Also by optimizing the value of such resistor or coil (that is using the minimum value) so as to assure a working under safety conditions both at maximum load (Vcc < Vccmax) and at short-circuit (Vcc < Vstop), it is hardly possible to satisfy the condition Vcc > Vstop at low or null load. To solve this last problem some ballast loads at the power supply output are then added so as to contrast the decreasing of Vcc. This, however, worsens the system efficiency and, above all, it practically makes impossible to satisfy the various EnergyStars, Energy2000, Blue Angel, etc.

The same also occur to other external circuital solutions used to minimize the peak effect. In all of them, satisfying the coriditions Vcc < Vccmax at full load and Vcc < Vstop in short circuit makes extremely difficult to satisfy also the condition Vcc > Vstop at minimum or null load.

In view of the state of the art described, it is an object of the present invention to provide an integrated control circuit that does not have the drawbacks of the known art.

According to the present invention, such an object is achieved by means of a control circuit of the minimum working voltage of the integrated control circuit of a switching power supply having a supply voltage; characterized in that said minimum working voltage can assume a first voltage value and a second voltage value; said first voltage value is higher than said second voltage value; said minimum working voltage switches from said first voltage value to said second voltage value in case of low or null load of said switching power supply; said minimum working voltage switches from said second voltage value to said first voltage value if the load is higher than a prefixed load of said switching power supply and at the same time said supply voltage is higher than said first voltage value.

The features and the advantages of the present invention will be made more evident by the following detailed description of a particular embodiment, illustrated as a non-limiting example in the annexed drawings, wherein:
figure 1 shows in a schematic way a part of an integrated control circuit of a switching power supply according to the known art;
figure 2 shows in a schematic way the course of the voltage Vcc and of the voltage Vcomp at the varying of the load;
figure 3a shows in a schematic way the trend of the voltage Vcc and of the voltage Vcomp when a short circuit is applied at the power supply output;
figure 3b shows in a schematic way the trend of the voltage Vcc and of the voltage Vcomp at the removal of a short circuit at the power supply output;
figure 4 shows in a schematic way a part of an integrated control circuit of a switching power supply according to a first embodiment of the present invention;
figure 5 shows in a schematic way a part of an integrated control circuit of a switching power supply according to a second embodiment of the present invention;
figure 6 shows in a schematic way a variation of the circuit of figure 5.

The maximum voltage Vccmax applicable to the integrated control circuit 12 is limited by technological constraints and therefore it must be defined by bringing it to the highest values allowed by the technology used. The idea at the base of the present invention is to adapt the threshold Vstop of the circuit UVLO to the working conditions of the power supply: a smaller value than the prefixed value at low or null load so to facilitate the satisfaction of the condition Vcc > Vstop and preferably a higher value than the prefixed value under short circuit conditions so as to facilitate the satisfaction of the condition Vcc < Vstop.

However the voltage Vstop must be always maintained within the safety limits for a correct driving of the power MOSFET, nevertheless at low load it is acceptable to provide a lower voltage than that provided under normal working conditions to the MOSFET gate (for example 7V instead of 10V). In fact, the resulting light increase of the conduction resistance of the MOSFET does not have a meaningful impact on its power dissipation, since under those conditions the passing-through current is very low and besides the duration of its conduction is very small compared with the time that intervenes among two periods of consecutive conduction.

Refer now to figure 2 that represents in a schematic way the trend of the voltage Vcc and of the voltage Vcomp at the load varying.

The voltage Vcomp is the voltage at the output of the error amplifier on board of the integrated control circuit 12 used in the power supply and is commonly indicated as "control voltage", because it controls the power supply determining the turn on and turning off timing values of the power supply power switching. Said voltage, within the limits of its dynamics, is proportional to the load applied to the power supply and therefore it is assumed as an indicative signal of the load conditions. Other voltages indicative of the output load conditions of the power supply can be used.

It must be observed that, following the increasing of the load the voltage Vcomp quickly climbs so as to restore the temporary decreasing of the output voltage of the power supply consequent to the increasing request of the power. The voltage Vcc increases accordingly but, because of the transformer parasitic elements and the filtering effect of the resistance R, this happens with notable delay with respect to level change of the control voltage.

Following the load decreasing, the voltage Vcomp quickly goes down so as to adjust the power supply to the reduced energy request of the load and to correct the resulting temporary increasing of the output voltage. Also in this case the level of the voltage Vcc, corresponding to the new load condition, is reached with notable delay with respect to the variation of the voltage Vcomp.

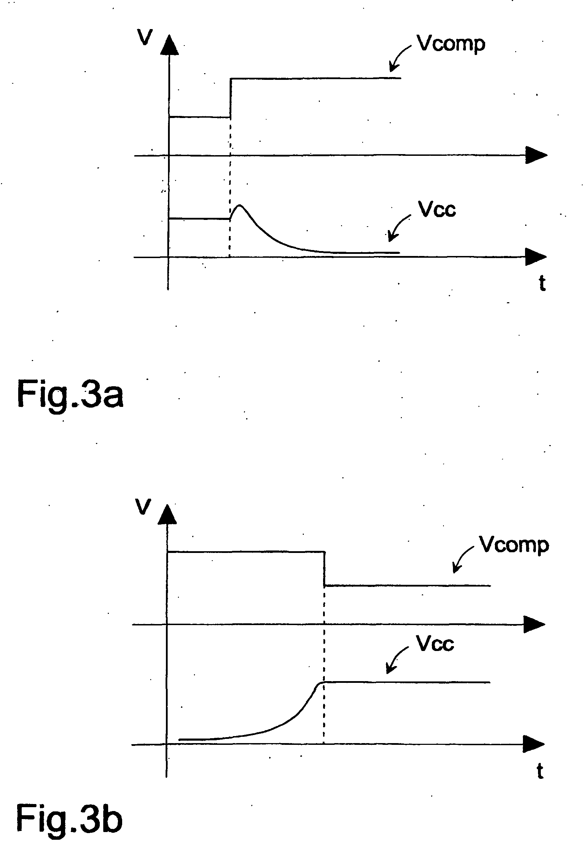

Refer now to figure 3a that shows in a schematic way the trend of the voltage Vcc and of the voltage Vcomp at the application of a short circuit to the power supply output, and to figure 3b that shows in a schematic way the trend of the voltage Vcc and of the voltage Vcomp at the removal of a short circuit at the power supply output.

It can be noted that, following to the application of the short circuit, after a first short part in which the Vcc tends to increase there is a slow decreasing toward lower values and, however, also in this case Vcc delays respect to Vcomp. At the removal of the short circuit (in the hypothesis that Vcc has not gone below Vstop and therefore the integrated control circuit has always been turned on), it is to be noted instead that Vcc goes up again toward the normal working value in advance with respect to Vcomp. This is explained by the fact that the power supply output voltage during the short circuit was a lot below the regulated value and that Vcomp stays high until such voltage, and therefore Vcc also, is returned approximately to the regulated value.

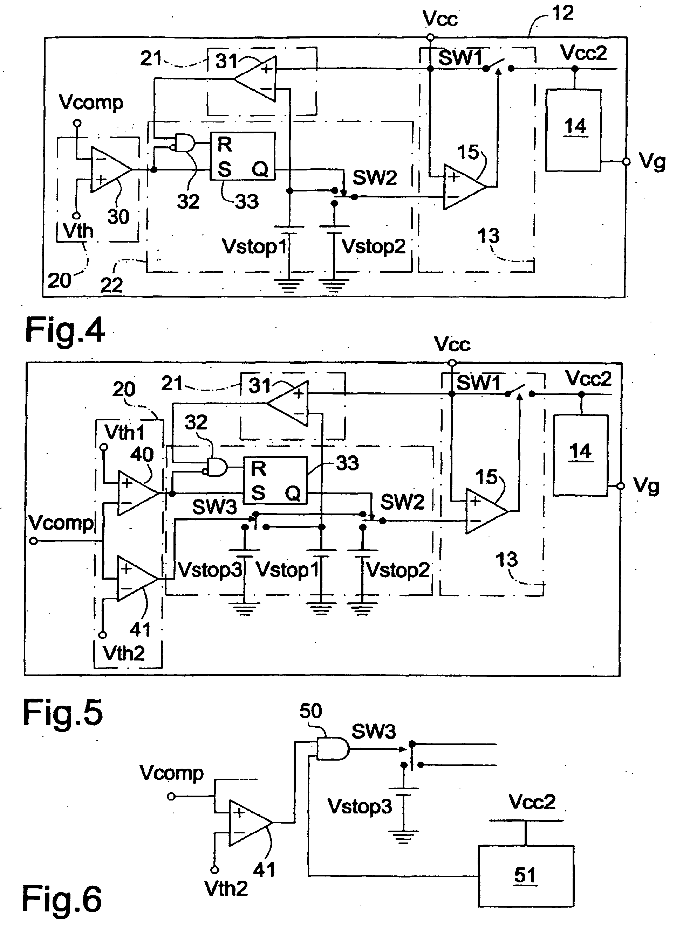

Refer now to figure 4 that shows in a schematic way a part of an integrated control circuit of a switching power supply according to a first embodiment of the present invention.

The circuit comprises a control system 20 of the voltage Vcomp, a control system 21 of the voltage Vcc and a processing system 22, that, receiving in input the information provided by the control systems 20 and 21, changes the value Vstop according to a prefixed law, so as to satisfy the conditions Vcc < Vccmax at full load and Vcc < Vstop in short circuit and Vcc > Vstop at minimum or null load.

The control system 20 of the voltage Vcomp receives in input the voltage Vcomp and a threshold voltage Vth and effects a comparison between such voltages and provides its output to the processing system 22.

The control system 21 of the voltage Vcc receives in input the voltage Vcc and a voltage Vstop and effects a comparison between such voltages and provides its output to the processing system 22.

The control system 20 of the voltage Vcomp is constituted by a comparator 30, preferably equipped with hysteresis for a higher noise immunity, where at its inverting input is applied the voltage Vcomp and at its not inverting input is applied the voltage Vth. The control system 21 is constituted by a comparator 31, where at its inverting input is applied the reference voltage Vstop1 and at its not inverting input is applied the voltage Vcc. The processing system 22 is constituted by an AND circuit 32 having applied at one input the output voltage of the comparator 31, and at the other input the inverted output voltage of the comparator 30. The output voltage from the comparator 30 is also applied to the input S of a flip flop RS 33. The output of the AND circuit 32 is applied to the input R of the flip flop RS 33. The output Q of the flip flop RS 33 controls a switch SW2, that can switch between reference voltages Vstop1 and Vstop2, and provides it to the inverting input of the comparator 15. The voltage Vstop1 is higher than the voltage Vstop2.

The function realized by this circuit is to decrease the threshold voltage of the block UVLO 13 from the prefixed value at Vstop1 to the value Vstop2 < Vstop1 when the voltage Vcomp is lower than the voltage value Vth (indication of the fact that the load at the power supply output is lower than a given value) and to bring it to the original value Vstop1 when the power supply load is higher than the value before considered (or to another slightly higher value due to the possible presence of the hysteresis) and Vcc is higher than Vstop1.

When there is Vcomp < Vth the comparator 30 provides a high input at the input S of the flip flop RS 33 setting high its output Q and switching the switch SW2 on Vstop2. Since the threshold of the block UVLO 13 is lowered and that Vcc delays on Vcomp, as from figure 2, the transition of such threshold cannot cause any trouble.

Nevertheless the return of the threshold of the block UVLO 13 from Vstop2 to Vstop1 cannot be controlled by the same comparator 30. Keeping in mind figure 2, it is supposed, as it is probable, that at minimum load the Vcc goes toward a value comprised between Vstop1 and Vstop2; in case of a sudden increasing of load that makes Vcomp > Vth (or Vth plus the hysteresis), Vcc that delays of different milliseconds would be below Vstop1 and the integrated circuit would turn off. It is therefore necessary to condition the restoration of the old threshold Vstop1 not only to the condition Vcomp > Vth but also to Vcc > Vstop1. This is realized by the AND gate 32 that provides the reset to the input R of the flip flop RS 33, and brings low its output Q by switching SW2 on Vstop1, when either one condition occurs.

Refer now to figure 5 that shows in a schematic way a part of an integrated control circuit of a switching power supply according to a second embodiment of the present invention.

With respect to figure 4 there is that the control system 20 of the voltage Vcomp is constituted by a comparator 40, preferably provided with hysteresis for a higher noise immunity, where at its inverting input is applied the voltage Vcomp and to its not inverting input is applied the voltage Vth1, and by a comparator 41, preferably equipped with hysteresis for a higher noise immunity, where at its not inverting input is applied the voltage Vcomp and at its inverting input is applied the voltage Vth2. The output of the comparator 40 is applied to the input S of the flip flop RS 33, and it is applied inverted to the input of the AND circuit 32. The output of the comparator 41 controls a switch SW3, that can switch between reference voltages Vstop3 and Vstop1 and provides it to a terminal of the switch SW2, while at the other terminal of the switch SW2 the reference voltage Vstop2 is applied.

Additionally to the function realized by the circuit of figure 4, this circuit increases the threshold of the block UVLO 13 from the prefixed value Vstop1 to the value Vstop3 > Vstop1 when the voltage Vcomp is higher than the value Vth2 (indication of the fact that the power supply is overloaded or in short circuit) and brings it to the original value Vstop 1 when the overload or short circuit condition is removed.

The simple comparator with reference voltage Vth is replaced by a window comparator in which the threshold voltage Vth1 corresponds to the voltage Vth of the circuit of figure 4 while the voltage Vth2 > Vth1 represents the maximum value of Vcomp for which the power supply is still in voltage regulation, or the minimum value of Vcomp that indicates an overload or a short-circuit at the output of the power supply. In the case of Vcomp < Vth1 there is exactly the same working described for the circuit of figure 4.

When Vcomp > Vth2 the comparator that perceives this condition switches the switch SW3 on Vstop3 (obviously, if Vcomp > Vth2 there is also Vcomp > Vth1, the output Q is high and SW2 is switched on Vstop1). In such a case, with a delay of the order of some tenth of milliseconds, as shown in figure 3a, presumably the Vcc will go down below said threshold causing the turning off of the integrated circuit and guarantying a sure working of the power supply under short circuit conditions. There is therefore also the disposition of a temporal window during which, if the short-circuit is removed, the turning off of the integrated circuit does not take place so providing continuity service to the power supply in case of accidental short-circuits of limited duration.

In this case the return of the threshold voltage of the block UVLO 13 from Vstop3 to Vstop1 can be controlled by the same comparator. Keeping in mind figure 3b, if the circuit were removed before Vcc < Vstop3, Vcc would set a lot near the normal working value before Vcomp is returned under Vth2 and, therefore, SW3 has been brought on Vstop1.

Refer now to figure 6 that shows in a schematic way a variation of the circuit of figure 5.

In this case the output of the comparator 41, instead of directly controlling the switch SW3, is applied to an AND circuit 50, whose output controls the switch SW3. At the other input of the AND circuit 50 is applied the output of a delay circuit 51 supplied by the voltage Vcc2 that supplies the driving circuit 14 of the power supply.

The threshold voltage of the block UVLO 13 is moved from Vstop1 to Vstop3 when Vcomp > Vth2 provided that it is not during the starting phase of the power supply, during which the output voltage has to pass from zero to the regulated value and therefore there is a condition functionally analogous to a short circuit and, for a more or less long period, there is Vcomp > Vth2 in absence of load anomalies. This implicates the presence of a signal that points out that the starting transient phase (that started at the moment in which Vcc > Vstart) is over. Such a signal can be produced by any delay circuit that is activated as soon as Vcc > Vstarts, for example when the switch SW1 is closed and Vcc2 is supplied also to the block 51, and provides such a high level output voltage value to activate the AND circuit 50.

## Claims

1. Control circuit of the minimum working voltage of the integrated control circuit of a switching power supply having a supply voltage (Vcc);
**characterized in that**
said minimum working voltage can assume a first voltage value (Vstop1) and a second voltage value (Vstop2);
said first voltage value (Vstop1) is higher than said second voltage value (Vstop2);
said minimum working voltage switches from said first voltage value (Vstop 1) to said second voltage value (Vstop2) in case of low or null load of said switching power supply;
said minimum working voltage switches from said second voltage value (Vstop2) to said first voltage value (Vstop1) if the load is higher than a prefixed load of said switching power supply and at the same time said supply voltage (Vcc) is higher than said first voltage value (Vstop1).

2. Control circuit according to claim 1 **characterized in that** said minimum working voltage switches from said first voltage value (Vstop1) to said second voltage value (Vstop2) when a voltage (Vcomp) proportional to the load applied to said switching power supply is lower than a first reference voltage (Vth, Vth1).

3. Control circuit according to claim 1 **characterized in that** said minimum working voltage switches from said second voltage value (Vstop2) to said first voltage value (Vstop1) when a voltage (Vcomp) proportional to the load applied to said switching power supply is higher than a first reference voltage (Vth, Vth1) and at the same time said supply voltage (Vcc) is higher than said first voltage value (Vstop1).

4. Control circuit according to claim 1 **characterized in that** said minimum working voltage can assume a third voltage value (Vstop3);
said third voltage value (Vstop3) is higher than said first voltage value (Vstop1);
said minimum working voltage switches from said first voltage value (Vstop1) to said third voltage value (Vstop3) when a voltage (Vcomp) proportional to the load applied to said switching power supply is higher than a second reference voltage (Vth2).

5. Control circuit according to claim 4 **characterized in that** said minimum working voltage switches from said first voltage value (Vstop1) to said third voltage value (Vstop3) when a voltage (Vcomp) proportional to the load applied to said switching power supply is higher than a second reference voltage (Vth2) and at the same time said switching power supply is already working.

6. Control circuit according to claim 4 **characterized by** comprising a circuit (13) that supplies, through a second supply voltage (Vcc2), a driving circuit (14) of said switching power supply when said supply voltage (Vcc) overcomes said first voltage value (Vstop1);
said minimum working voltage switches from said first voltage value (Vstop1) to said third voltage value (Vstop3) when a voltage (Vcomp) proportional to the load applied to said switching power supply is higher than a second reference voltage (Vth2) and a prefixed delay is passed ever since in which said second supply voltage (Vcc2) has been enabled.

7. Integrated control circuit internally comprising a circuit according to claim 1.

8. Switching power supply comprising an integrated control circuit according to claim 7.

## Revendications

1. Circuit de commande de la tension de fonctionnement minimum du circuit de commande intégré d'une alimentation de puissance à découpage ayant une tension d'alimentation (Vcc),
**caractérisé en ce que** :
la tension de fonctionnement minimum peut prendre une première valeur de tension (Vstop1) et une deuxième valeur de tension (Vstop2) ;
la première valeur de tension (Vstop1) est supérieure à la deuxième valeur de tension (Vstop2) ;
la tension de fonctionnement minimum commute de la première valeur de tension (Vstop1) à la deuxième valeur de tension (Vstop2) en cas de charge faible ou nulle de l'alimentation commutée ;
la tension de fonctionnement minimum commute de la deuxième valeur de tension (Vstop2) à la première valeur de tension (Vstop1) si la charge est supérieure à une charge prédéterminée de l'alimentation commutée et qu'en même temps la tension d'alimentation (Vcc) est supérieure à la première valeur de tension (Vstop1).

2. Circuit de commande selon la revendication 1, **caractérisé en ce que** la tension de fonctionnement minimum commute de la première valeur de tension (Vstop1) à la deuxième valeur de tension (Vstop2) quand une tension (Vcomp) proportionnelle à la charge appliquée à l'alimentation commutée est inférieure à une première tension de référence (Vth, Vth1).

3. Circuit de commande selon la revendication 1, **caractérisé en ce que** la tension de fonctionnement minimum commute de la deuxième valeur de tension (Vstop2) à la première valeur de tension (Vstop1) quand une tension (Vcomp) proportionnelle à la charge appliquée à l'alimentation commutée est supérieure à une première tension de référence (Vth, Vth1) et qu'en même temps la tension d'alimentation (Vcc) est supérieure à la première valeur de tension (Vstop1).

4. Circuit de commande selon la revendication 1, **caractérisé en ce que** :
la tension de fonctionnement minimum peut prendre une troisième valeur de tension (Vstop3) ;
la troisième valeur de tension (Vstop3) est supérieure à la première valeur de tension (Vstop1) ;
la tension de fonctionnement minimum commute de la première valeur de tension (Vstop1) à la troisième valeur de tension (Vstop3) quand une tension (Vcomp) proportionnelle à la charge appliquée à l'alimentation commutée est supérieure à la deuxième tension de référence (Vth2).

5. Circuit de commande selon la revendication 4, **caractérisé en ce que** la tension de fonctionnement minimum commute de la première valeur de tension (Vstop1) à la troisième valeur de tension (Vstop3) quand une tension (Vcomp) proportionnelle à la charge appliquée à l'alimentation commutée est supérieure à une seconde tension de référence (Vth2) et qu'en même temps l'alimentation commutée est déjà en fonctionnement.

6. Circuit de commande selon la revendication 4, **caractérisé en ce qu'**il comprend un circuit (13) qui alimente par l'intermédiaire d'une deuxième tension d'alimentation (Vcc2) un circuit de commande (14) de l'alimentation commutée quand la tension d'alimentation (Vcc) dépasse la première valeur de tension (Vstop1) ;
la tension de fonctionnement minimum commute de la première valeur de tension (Vstop1) à la troisième valeur de tension (Vstop3) quand une tension (Vcomp) proportionnelle à la charge appliquée à l'alimentation commutée est supérieure à la seconde tension de référence (Vth2) et qu'un retard prédéterminé est dépassé depuis que la seconde tension d'alimentation (Vcc2) a été validée.

7. Circuit de commande intégré comprenant de façon interne un circuit selon la revendication 1.

8. Alimentation commutée comprenant un circuit de commande intégré selon la revendication 7.

## Patentansprüche

1. Steuerschaltung für die minimale Arbeitsspannung der integrierten Steuerschaltung eines Schaltnetzteils mit einer Versorgungsspannung (Vcc),
**dadurch gekennzeichnet, dass**
die minimale Arbeitsspannung einen ersten Spannungswert (Vstop1) und einen zweiten Spannungswert (Vstop2) annehmen kann,
der erste Spannungswert (Vstop1) höher ist als der zweite Spannungswert (Vstop2),
die minimale Arbeitsspannung von dem ersten Spannungswert (Vstop1) auf den zweiten Spannungswert (Vstop2) wechselt im Falle einer geringen oder nicht vorhandenen Belastung des Schaltnetzteils,
die minimale Arbeitsspannung von dem zweiten Spannungswert (Vstop2) auf den ersten Spannungswert (Vstop1) wechselt, wenn die Belastung höher ist als eine vorbestimmte Belastung des Schaltnetzteils und gleichzeitig die Versorgungsspannung (Vcc) höher ist als der erste Spannungswert (Vstop1).

2. Steuerschaltung nach Anspruch 1, **dadurch gekennzeichnet, dass** die minimale Arbeitsspannung von dem ersten Spannungswert (Vstop1) auf den zweiten Spannungswert (Vstop2) wechselt, wenn eine Spannung (Vcomp), die proportional ist zu der an dem Schaltnetzteil anliegenden Last, niedriger als eine erste Referenzspannung (Vth, Vth1) ist.

3. Steuerschaltung nach Anspruch 1, **dadurch gekennzeichnet, dass** die minimale Arbeitsspannung von dem zweiten Spannungswert (Vstop2) auf den ersten Spannungswert (Vstop1) wechselt, wenn eine Spannung (Vcomp), die proportional ist zu der an dem Schaltnetzteil anliegenden Last, höher ist als eine erste Referenzspannung (Vth, Vth1) und gleichzeitig die Versorgungsspannung (Vcc) höher ist als der erste Spannungswert (Vstop1).

4. Steuerschaltung nach Anspruch 1, **dadurch gekennzeichnet, dass** die minimale Arbeitsspannung einen dritten Spannungswert (Vstop3) annehmen kann,
der dritte Spannungswert (Vstop3) höher ist als der erste Spannungswert (Vstop1),
die minimale Arbeitsspannung von dem ersten Spannungswert (Vstop1) auf den dritten Spannungswert (Vstop3) wechselt, wenn eine Spannung (Vcomp), die proportional ist zu der an dem Schaltnetzteil anliegenden Last, höher ist als eine zweite Referenzspannung (Vth2).

5. Steuerschaltung nach Anspruch 4, **dadurch gekennzeichnet, dass** die minimale Arbeitsspannung von dem ersten Spannungswert (Vstop1) auf den dritten Spannungswert (Vstop3) wechselt, wenn eine Spannung (Vcomp), die proportional ist zu der an dem Schaltnetzteil anliegenden Last, höher ist als eine zweite Referenzspannung (Vth2) und gleichzeitig das Schaltnetzteil bereits arbeitet.

6. Steuerschaltung nach Anspruch 4, **dadurch gekennzeichnet, dass** sie eine Schaltung (13) aufweist, die mittels einer zweiten Versorgungsspannung (Vcc2) eine Treiberschaltung (14) des Spannungsnetzteils versorgt, wenn die Versorgungsspannung (Vcc) über den ersten Spannungswert (Vstop1) kommt,
die minimale Arbeitsspannung von dem ersten Spannungswert (Vstop1) auf den dritten Spannungswert (Vstop3) wechselt, wenn eine Spannung (Vcomp), die proportional ist zu der an dem Schaltnetzteil anliegenden Last, höher ist als eine zweite Referenzspannung (Vth2) und eine vorbestimmte Verzögerungszeit seither vergangen ist, in der die zweite Versorgungsspannung (Vcc2) aktiviert wurde.

7. Integrierte Steuerschaltung, die intern eine Schaltung gemäß Anspruch 1 aufweist.

8. Schaltnetzteil mit einer integrierten Steuerschaltung gemäß Anspruch 7.
